(19) Europäisches Patentamt European Patent Office Office européen des brevets

(11) **EP 3 571 466 B1**

(12) **FASCICULE DE BREVET EUROPEEN**

(45) Date de publication et mention de la délivrance du brevet:
**01.11.2023 Bulletin 2023/44**

(21) Numéro de dépôt: **17783932.1**

(22) Date de dépôt: **21.09.2017**

(51) Classification Internationale des Brevets (IPC):
**G01C 9/00** *(2006.01)* **B60Q 1/10** *(2006.01)*
**G01C 21/16** *(2006.01)*

(52) Classification Coopérative des Brevets (CPC):
**G01C 9/00; B60Q 1/115; G01C 21/16**

(86) Numéro de dépôt international:
**PCT/FR2017/052535**

(87) Numéro de publication internationale:
**WO 2018/065692 (12.04.2018 Gazette 2018/15)**

(54) **PROCÉDÉ ET DISPOSITIF AUTONOMES DE DÉTERMINATION D'UNE ASSIETTE D'UN VÉHICULE AUTOMOBILE**

AUTONOMES VERFAHREN UND VORRICHTUNG ZUR BESTIMMUNG EINES NEIGUNGSWINKELS EINES KRAFTFAHRZEUGS

AUTONOMOUS METHOD AND DEVICE FOR DETERMINING THE PITCH ATTITUDE OF A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.10.2016 FR 1659692**

(43) Date de publication de la demande:
**27.11.2019 Bulletin 2019/48**

(73) Titulaire: **AML Systems**
**75008 Paris (FR)**

(72) Inventeurs:
• **KOULOUH, Hassan**
**93310 Le Pre Saint Gervais (FR)**
• **RIVIER, Cyril**
**78400 Chatou (FR)**
• **LOPEZ, Daniel**
**93220 Gagny (FR)**

(74) Mandataire: **Gevers & Orès**
**Immeuble le Palatin 2**
**3 Cours du Triangle**
**CS 80165**
**92939 Paris La Défense Cedex (FR)**

(56) Documents cités:
EP-A1- 2 952 385    EP-A2- 2 724 889
WO-A1-2016/042599    FR-A1- 2 915 283

**Description**

La présente invention concerne notamment un procédé et un dispositif autonomes de détermination au moins d'une assiette d'un véhicule automobile et de correction de ses variations par rapport à une référence.

En particulier pour réaliser une correction du faisceau d'éclairage d'un projecteur d'un véhicule automobile, il peut être nécessaire de connaître exactement l'assiette du véhicule automobile. Dans le cadre de la présente invention, l'assiette illustre l'angle entre un axe longitudinal de référence de châssis du véhicule automobile et un angle longitudinal de référence d'essieu du véhicule automobile. En effet, en fonction de la répartition de charge dans le véhicule, l'assiette, c'est-à-dire la position du châssis par rapport à l'essieu, peut varier de sorte que l'angle d'émission d'un faisceau d'éclairage puisse être modifié. On sait que la réglementation interdit un relèvement trop important du faisceau d'éclairage, dans certaines conditions de route, en particulier en feu de croisement, notamment pour éviter un éblouissement d'un véhicule venant en sens inverse. Par conséquent, une modification de l'angle d'émission d'un faisceau d'éclairage, en raison notamment d'une répartition particulière de charge dans le véhicule, peut entraîner dans certains cas un éblouissement non autorisé. Une correction est donc nécessaire dans un tel cas.

Pour déterminer l'assiette du véhicule, on connaît des capteurs d'assiette. On prévoit au moins un, et en général au mois deux capteurs d'assiette sur un véhicule automobile. De tels capteurs d'assiette comportent, généralement, un élément de mesure lié à deux bras qui sont articulés et qui sont liés, respectivement, à un élément solidaire du châssis et à un élément solidaire de l'essieu. De tels capteurs d'assiette présentent un coût élevé.

Aussi, pour réduire ce coût, il est intéressant de pouvoir déterminer l'assiette du véhicule automobile à partir d'autres moyens.

Les documents EP 2 724 889, WO 2016/042599, FR 2 915 283 et EP 2 952 385 permettent de déterminer l'assiette de véhicules.

On connaît, par le document EP-2 724 889, un appareil de contrôle d'une lampe d'un véhicule automobile. Ce document décrit notamment un procédé de détermination d'une assiette du véhicule automobile. Ce procédé connu utilise, pour déterminer l'assiette, des mesures accélérométriques, ainsi que d'autres données issues du véhicule automobile, et notamment la vitesse de ce dernier.

Un tel procédé utilise donc de données et notamment de mesures fournies par le véhicule automobile. Or, la transmission d'informations du véhicule automobile vers un dispositif destiné à mettre en oeuvre ce procédé, est complexe et coûteux.

La présente invention a pour objet de remédier à cet inconvénient, en proposant un procédé de détermination d'une assiette de véhicule automobile selon la revendication 1, qui permet de déterminer et fournir une valeur d'assiette particulièrement précise, et ceci de façon autonome.

Ainsi, grâce à l'invention, on est en mesure de déterminer de façon très précise l'assiette d'un véhicule automobile. De plus, cette détermination est réalisée de façon complètement autonome, en utilisant à cet effet uniquement (exclusivement) des mesures accélérométriques réalisées lors de l'étape de mesure. Cette détermination ne nécessite donc pas de données telles que la vitesse par exemple, issues du véhicule automobile, à la différence du document EP-2 724 889 notamment. Ceci permet de remédier à l'inconvénient précité.

Ledit coefficient de proportionnalité $a1$ vérifie la relation suivante :

$$a1 = a0 + Kzx$$

dans laquelle :

- $Kzx$ est un paramètre interne du système ; et
- $a_0 = -tg\alpha,$ $\alpha$ étant l'assiette et $tg$ la tangente,

et l'étape de calcul comprend une sous-étape auxiliaire consistant à calculer ledit paramètre interne du système $Kzx$.

En outre, de façon avantageuse, pour un véhicule automobile à l'arrêt, l'assiette est déterminée à partir d'une variation de l'angle d'inclinaison du véhicule automobile par rapport à l'horizontale, l'angle d'inclinaison étant égal à la somme de la pente de la route et de l'assiette du véhicule automobile, ladite variation de l'angle d'inclinaison étant déterminée exclusivement à partir de la seule accélération longitudinale, mesurée à l'étape de mesure.

L'étape de mesure consiste à mesurer également, à l'aide d'un troisième accéléromètre, une accélération latérale qui est orthogonale auxdites accélérations verticale et longitudinale, ladite accélération latérale mesurée à l'étape de mesure étant utilisée à l'étape de calcul au moins pour éliminer des trajectoires non rectilignes (dans des marges prédéterminées près).

De façon avantageuse, l'étape de mesure consiste à mesurer également, à l'aide d'au moins un gyromètre, une valeur gyrométrique, ladite valeur gyrométrique mesurée à l'étape de mesure étant utilisée à l'étape de calcul au moins pour éliminer des trajectoires non rectilignes (dans des marges prédéterminées près).

En outre, avantageusement, l'étape de mesure consiste à mesurer également, à l'aide d'au moins un magnétomètre, une valeur de champ magnétique.

Par ailleurs, dans un mode de réalisation particulier, ledit procédé comporte de plus :

- une étape de calcul auxiliaire consistant à calculer une valeur de correction d'un angle d'éclairage d'un projecteur du véhicule automobile, à l'aide de l'assiette du véhicule automobile calculée à l'étape de calcul précitée ; et

- une étape de transmission consistant à transmettre cette valeur de correction à un élément correcteur apte à corriger l'angle d'éclairage du projecteur du véhicule automobile.

La présente invention concerne également un dispositif de détermination autonome au moins de l'assiette d'un véhicule automobile selon la revendication 6.

Avantageusement, l'unité de mesure comporte, de plus, au moins l'un des éléments suivants :

- au moins un gyromètre ;
- et éventuellement au moins un magnétomètre.

La présente invention concerne, en outre, un système de correction d'un angle d'éclairage d'un projecteur de véhicule automobile, ledit système de correction comportant un dispositif tel que celui décrit ci-dessus, et au moins un élément correcteur apte à corriger l'angle d'éclairage du projecteur automobile à l'aide d'une valeur de correction reçue dudit dispositif.

Par ailleurs, la présente invention concerne également un projecteur pour véhicule automobile, qui est remarquable en ce qu'il comporte au moins un tel système de correction d'angle d'éclairage.

L'invention sera mieux comprise, et d'autres buts, détails, caractéristiques et avantages de celle-ci apparaîtront plus clairement au cours de la description explicative détaillée qui va suivre, de modes de réalisation de l'invention donnés à titre d'exemple purement illustratif et non limitatif, en référence aux dessins schématiques annexés. Sur ces dessins :

- la figure 1 est le schéma synoptique d'un mode de réalisation particulier d'un dispositif selon l'invention ;
- la figure 2 montre un véhicule automobile roulant suivant une pente, auquel est appliquée l'invention ; et
- les figures 3 et 4 sont des graphiques permettant d'expliquer le mode de calcul mis en oeuvre par le dispositif selon l'invention.

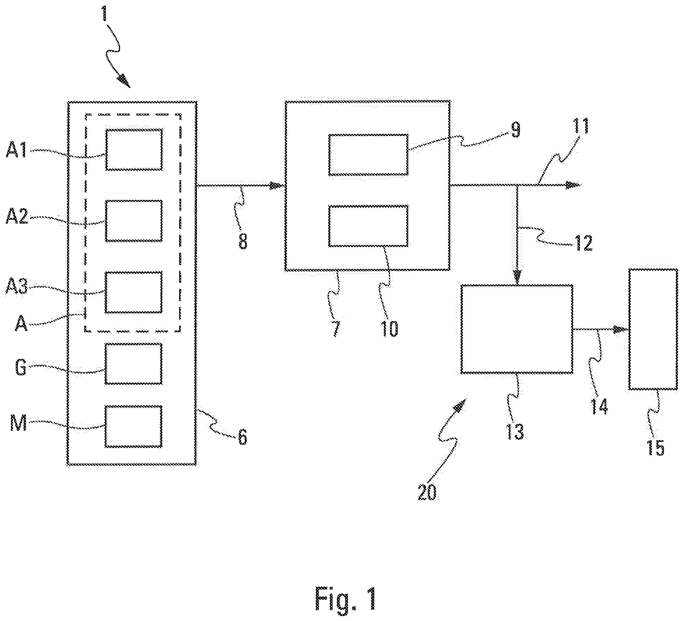

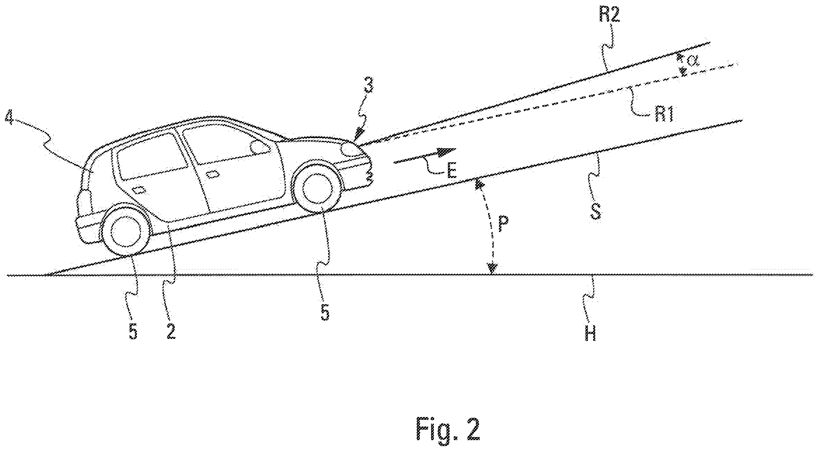

Le dispositif 1 illustrant l'invention et représenté schématiquement sur la figure 1 est destiné à déterminer (au moins) l'assiette α d'un véhicule automobile 2 tel que représenté sur la figure 2 et à corriger les variations d'assiette par rapport à une référence.

En particulier, comme précisé ci-dessous, cette information (assiette α) peut notamment être utilisée pour réaliser une correction du faisceau d'éclairage d'un projecteur 3 du véhicule automobile 2.

Dans le cadre de la présente invention, l'assiette α illustre l'angle entre un axe longitudinal de référence R1 d'essieu du véhicule automobile 2 et un axe longitudinal de référence R2 de châssis du véhicule automobile 2, comme représenté sur la figure 2. De façon générale, on considère que le châssis du véhicule automobile 2 comportant l'habitacle 4 est relié à l'essieu pourvu des roues 5 qui touchent le sol, via un système de suspension. Les axes longitudinaux de référence sont définis dans un plan vertical de symétrie du véhicule automobile 2, suivant une direction horizontale lorsque respectivement l'essieu et le châssis sont situés horizontalement. L'axe longitudinal de référence R2 de châssis et l'axe longitudinal de référence R1 d'essieu peuvent être confondus lorsque l'assiette α est nulle ou écartés angulairement dans le plan vertical de symétrie d'un angle correspondant à l'assiette α, comme représenté sur la figure 2.

Dans l'exemple de la figure 2, le véhicule automobile 2 roule dans le sens illustré par une flèche E sur une route S inclinée (vers le haut) d'un angle P dit pente, par rapport à l'horizontale H.

Selon l'invention, ledit dispositif 1 comporte, comme représenté sur la figure 1 :

- une unité de mesure 6 comprenant au moins deux accéléromètres A1 et A2 liés au châssis du véhicule automobile 2. Les deux accéléromètres A1 et A2 sont configurés pour mesurer, respectivement, une accélération Ax dite longitudinale (qui est définie selon un axe X correspondant à l'axe longitudinal de référence R2) et une accélération Az dite verticale (qui est définie selon un axe Z qui est orthogonal à l'axe X dans le plan vertical de symétrie du véhicule automobile 2). De plus, l'unité de mesure 6 est configurée pour mesurer une pluralité d'ensembles de mesure successifs, chaque ensemble de mesure comprenant au moins une accélération longitudinale Ax mesurée par l'accéléromètre A1 et une accélération verticale Az mesurée par l'accéléromètre A2 ; et
- une unité de calcul 7 reliée par une liaison 8 à l'unité de mesure 6 et configurée pour calculer l'assiette α du véhicule automobile 2 à l'aide exclusivement des mesures réalisées par l'unité de mesure 6.

Les deux accéléromètres A1 et A2 sont agencés sensiblement orthogonalement, de façon rigide sur le châssis du véhicule automobile 2.

Dans le cadre de la présente invention, on considère que l'accélération verticale Az et l'accélération longitudinale Ax sont liées entre elles par une fonction affine via un coefficient de proportionnalité dépendant de l'assiette α pour une pente (de route) P constante, comme précisé ci-dessous.

Selon l'invention, ladite unité de calcul 7 comprend :

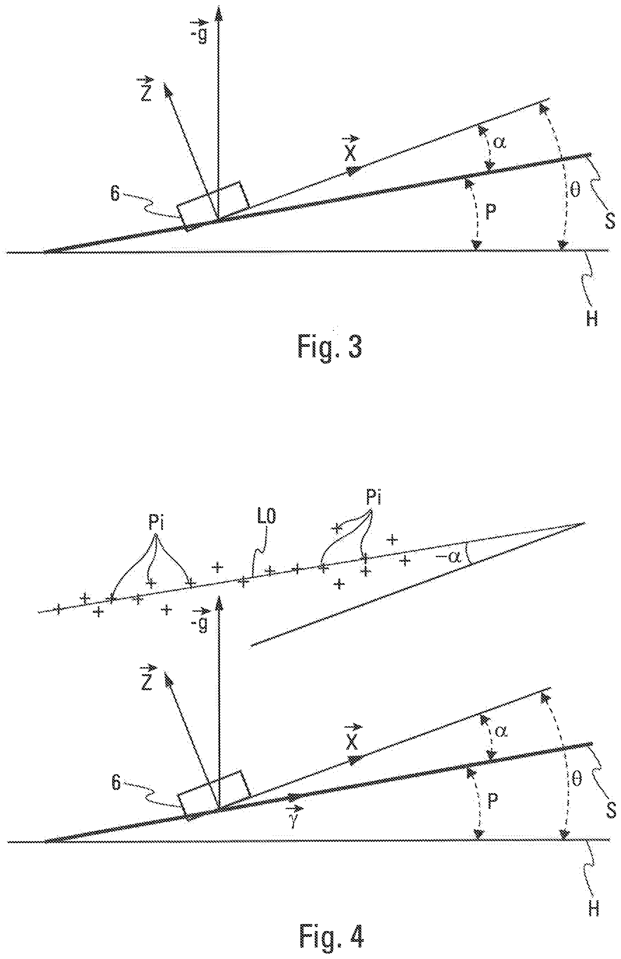

- un élément de calcul 9 configuré pour mettre en oeuvre une régression linéaire, permettant d'obtenir une droite L0 représentée sur la figure 4, à l'aide d'une pluralité d'ensembles de mesure (illustrés par des points Pi sur la figure 4) comprenant chacun au moins une accélération longitudinale Ax et une accélération verticale Az, dans le but de déterminer un coefficient de proportionnalité. Ledit élément de calcul 9 détermine une pluralité de coefficients de proportionnalité ; et

- un élément 10 configuré pour déterminer l'assiette $\alpha$, à partir desdits coefficients de proportionnalité.

Ainsi, le dispositif 1 est en mesure de déterminer de façon très précise l'assiette $\alpha$ du véhicule automobile 2. De plus, cette détermination est réalisée de façon complètement autonome, en utilisant à cet effet uniquement (exclusivement) des mesures accélérométriques réalisées par l'unité de mesure 6. Cette détermination ne nécessite donc pas de données issues du véhicule automobile, telles que sa vitesse par exemple.

On considère que le coefficient de proportionnalité $a1$ vérifie la relation suivante :

$$a1 = a0 + Kzx$$

dans laquelle :

- $Kzx$ est un paramètre interne du système ; et
- $a0 = -tg\alpha$, $\alpha$ étant l'assiette et $tg$ la tangente.

La relation précédente est obtenue à partir des éléments suivants en référence notamment à la figure 3.

Lorsque le véhicule automobile 2 est en mouvement (sur une route S présentant une pente P, comme représenté sur la figure 2), le vecteur accélération

$$\vec{\Gamma} = \begin{bmatrix} Ax \\ \hline Az \end{bmatrix}$$

comprenant l'accélération longitudinale Ax et l'accélération verticale Az, vérifie la relation suivante :

$$\vec{\Gamma} = \begin{bmatrix} Ax \\ \hline Az \end{bmatrix} = \vec{\gamma} - \vec{g}$$

dans laquelle :

- $\gamma$ est l'accélération du véhicule automobile 2 ; et
- $g$ est l'accélération de la pesanteur.

On obtient donc :

$$Ax = \sin\theta + \gamma\cos\alpha$$

$$Az = \cos\theta - \gamma\sin\alpha$$

Ainsi, l'accélération longitudinale Ax et l'accélération verticale Az sont liées entre elles par l'expression suivante :

$$Az = -tg\alpha.Ax + \cos P / \cos\alpha$$

qui peut s'écrire, en deux dimensions, sous la forme :

$$Az = a.Ax + b$$

Au premier ordre, en négligeant les non-linéarités pour des valeurs de $a$ très inférieur à 1, on obtient l'expression suivante :

$$Az = a1.Ax + b1$$

dans laquelle :

- $b1$ prend en compte des bruits; et
- $a1 = a0 + Kzx$, avec $a0 = -tg\alpha$.

On considère ainsi que le coefficient de proportionnalité $a1$ vérifie la relation :

$$a1 = a0 + Kzx.$$

L'unité de calcul 7 calcule le paramètre interne $Kzx$, puis elle en déduit l'assiette $\alpha$.

Par ailleurs, pour un véhicule automobile 2 à l'arrêt, l'assiette est déterminée de façon simplifiée par l'unité de calcul 7. Dans ce cas, l'assiette $\alpha$ est déterminée à partir d'une variation de l'angle d'inclinaison $\theta$ (représenté sur la figure 3) du véhicule automobile 2 par rapport à l'horizontal H. L'angle d'inclinaison $\theta$ est égal à la somme de la pente P de la route S et de l'assiette $\alpha$ du véhicule automobile 2. Dans ce cas (arrêt du véhicule automobile 2), l'angle d'inclinaison $\theta$ dépend de la seule accélération longitudinale Ax, mesurée par l'accéléromètre A1, via la relation $\theta = \arcsin(Ax)$.

En effet, lorsque le véhicule automobile 2 est à l'arrêt, le vecteur accélération $\vec{\Gamma} = \begin{bmatrix} Ax \\ \hline Az \end{bmatrix}$ comprenant l'accélération longitudinale Ax et l'accélération verticale Az, vérifie la relation suivante :

$$\vec{\Gamma} = \begin{bmatrix} Ax \\ \hline Az \end{bmatrix} = -\vec{g}$$

On obtient donc :

$$Ax = \sin\theta$$

$$Az = \cos\theta$$

et finalement :

$$\theta = \arcsin(Ax).$$

Le dispositif 1 est donc autonome, et il permet de mesurer l'assiette du véhicule automobile (mobile ou roulant) de manière continue et précise dès sa mise sous tension.

L'unité de mesure 6 comporte, de plus, un accéléromètre A3 qui est configuré pour mesurer une accélération latérale Ay. Cette accélération latérale Ay est, par définition, mesurée selon un axe Y (non représenté) qui est orthogonal aux axes X et Z.

L'accélération latérale mesurée par l'accéléromètre A3 est utilisée par l'unité de calcul 7 au moins pour éliminer des trajectoires (virage, montée ,...) insuffisamment rectilignes, c'est-à-dire non rectilignes (dans des marges prédéterminées) ou non suffisamment rectilignes pour la mise en oeuvre de l'invention.

De préférence, les accéléromètres A1, A2 et A3 sont des systèmes micro-électromécaniques de type MEMS (« Microelectromechanical System » en anglais).

De plus, dans un mode de réalisation préféré, les accéléromètres A1, A2 et A3 (ou A1 et A2 seulement) font partie d'un même système de mesure accélérométrique A de type trois axes (ou deux axes). De plus, l'unité de calcul 7 est intégrée dans une carte électronique associée audit système de mesure.

En outre, l'unité de mesure 6 comporte un magnétomètre M qui est configuré pour mesurer une valeur de champ magnétique.

Par ailleurs, dans un mode de réalisation particulier, l'unité de mesure 6 comporte, de plus, au moins un gyromètre G apte à mesurer une valeur gyrométrique. Cette valeur gyrométrique mesurée est utilisée par l'unité de calcul 7 au moins pour éliminer des trajectoires insuffisamment rectilignes, c'est-à-dire qui ne sont pas rectilignes dans des marges prédéterminées près.

Par conséquent, le troisième accéléromètre A3 et/ou le ou les gyromètres G permettent d'éliminer des trajectoires non rectilignes, telles que des virages par exemple.

Le ou les gyromètres G peuvent participer à la discrimination entre la phase de roulage et le chargement, et également à l'autoapprentissage des caractéristiques du véhicule.

L'assiette $\alpha$ déterminée, de la manière précisée ci-dessus, par l'unité de calcul 7 peut être transmise à un élément ou système utilisateur, via une liaison 11 (figure 1).

Par ailleurs, dans un mode de réalisation particulier, le dispositif 1 comporte de plus, comme représenté sur la figure 1 :

- une unité de calcul auxiliaire 13 configurée pour calculer une valeur de correction d'un angle d'éclairage d'un projecteur 3 du véhicule automobile 2 (figure 2). Pour ce faire, l'unité de calcul auxiliaire 13 utilise l'assiette $\alpha$ du véhicule automobile calculée par l'unité de calcul 7, qui est reçue via une liaison 12 ; et
- une liaison de transmission 14 configurée pour transmettre cette valeur de correction à au moins un élément correcteur 15 usuel, qui est apte à corriger l'angle d'éclairage du projecteur conformément à cette valeur de correction.

L' unité de calcul auxiliaire 13 peut être intégrée dans l'unité de calcul 7.

Le dispositif 1 peut faire partie d'un système de correction 20 représenté partiellement sur la figure 1 et destiné à corriger de façon automatique et autonome un angle d'éclairage d'un projecteur 3 de véhicule automobile.

Ce système de correction 20 comporte pour ce faire, en plus un dispositif 1, au moins un élément correcteur 15 apte à corriger, de façon usuelle, l'angle d'éclairage du projecteur 3 du véhicule automobile 2 à l'aide d'une valeur de correction reçue dudit dispositif 1.

Par ailleurs, la présente invention concerne également un projecteur qui, en plus de ses moyens usuels (source de lumière,...), comporte au moins un tel système 20 de correction d'angle d'éclairage.

## Revendications

1. Procédé de détermination autonome au moins d'une assiette d'un véhicule automobile (2), ladite assiette ($\alpha$) illustrant l'angle entre un axe longitudinal de référence de châssis (R2) du véhicule automobile (2) et un axe longitudinal de référence d'essieu (R1) du véhicule automobile (2), comportant:

- une étape de mesure mise en oeuvre à l'aide d'au moins deux accéléromètres (A1, A2) liés au châssis du véhicule (2), les deux accéléromètres (A1, A2) étant configurés pour mesurer, respectivement, une accélération dite longitudinale et une accélération dite verticale du véhicule automobile (2), l'étape de mesure consistant à mesurer une pluralité d'ensembles de mesure successifs, chaque ensemble de mesure comprenant au moins une accélération longitudinale mesurée et une accélération verticale mesurée ; et
- une étape de calcul mise en oeuvre pour une unité de calcul (7) et consistant à calculer l'assiette ($\alpha$) du véhicule (2) à l'aide exclusivement des mesures réalisées à l'étape de mesure, ladite étape de calcul considérant que l'accélération verticale (Az) et l'accélération longitudinale (Ax) sont liées entre elles par une fonction affine via un coefficient de proportionnalité a1 dépendant de l'assiette ($\alpha$) pour une pente de route (P) constante, ladite étape de calcul comprenant :

> • une première sous-étape consistant à mettre en oeuvre une régression linéaire, à l'aide d'une pluralité d'ensembles de mesure comprenant chacun au moins une accélération verticale (Az) et une accélération longitudinale (Ax), afin de déterminer un coefficient de proportionnalité a1, ladite première sous-étape étant mise en oeuvre une pluralité de fois pour obtenir une pluralité de coefficients de proportionnalité a1 ; et
> • une seconde sous-étape consistant à déterminer ladite assiette ($\alpha$), à partir des coefficients de proportionnalité a1 déterminés à la première sous-étape ;

le procédé étant **caractérisé en ce que**:

> l'étape de mesure consiste à mesurer également, à l'aide d'un troisième accéléromètre (A3), une accélération latérale qui est orthogonale auxdites accélérations verticale et longitudinale, ladite accélération latérale mesurée à l'étape de mesure étant utilisée à l'étape de calcul au moins pour éliminer des trajectoires non rectilignes dans des marges prédéterminées, ledit coefficient de proportionnalité $a$1 vérifiant la relation suivante :

$$a1 = a0 + Kzx$$

> dans laquelle :

> • $Kzx$ est un paramètre interne du système ; et
> • $a0 = -tg\alpha$, $\alpha$ étant l'assiette et $tg$ la tangente,

> et l'étape de calcul comprenant une sous-étape auxiliaire consistant à calculer le paramètre interne du système $Kzx$.

**2.** Procédé selon l'une quelconque des revendications précédentes, **caractérisé en ce que**, pour un véhicule automobile (2) à l'arrêt, l'assiette ($\alpha$) est déterminée à partir d'une variation d'un angle d'inclinaison ($\theta$) du véhicule automobile (2) par rapport à l'horizontale (H), l'angle d'inclinaison ($\theta$) étant égal à la somme de la pente (P) de la route (S) et de l'assiette ($\alpha$) du véhicule automobile (2), ladite variation de l'angle d'inclinaison ($\theta$) étant déterminée exclusivement à partir de la seule accélération longitudinale, mesurée à l'étape de mesure.

**3.** Procédé selon l'une quelconque des revendications précédentes, **caractérisé en ce que** l'étape de mesure consiste à mesurer également, à l'aide d'au moins un gyromètre (G), une valeur gyrométrique, ladite valeur gyrométrique mesurée à l'étape de mesure étant utilisée à l'étape de calcul au moins pour éliminer des trajectoires non rectilignes.

**4.** Procédé selon l'une quelconque des revendications précédentes, **caractérisé en ce que** l'étape de mesure consiste à mesurer également, à l'aide d'au moins un magnétomètre (M), une valeur de champ magnétique.

**5.** Procédé selon l'une quelconque des revendications précédentes, **caractérisé en ce qu'**il comporte de plus :

> - une étape de calcul auxiliaire consistant à calculer une valeur de correction d'un angle d'éclairage d'un projecteur (3) du véhicule automobile (2), à l'aide de l'assiette ($\alpha$) du véhicule automobile (2) calculée à ladite étape de calcul ; et
> - une étape de transmission consistant à transmettre cette valeur de correction à un élément correcteur (15) apte à corriger l'angle d'éclairage du projecteur (3) du véhicule automobile (2).

**6.** Dispositif de détermination autonome au moins d'une assiette d'un véhicule automobile (2), ladite assiette ($\alpha$) illustrant l'angle entre un axe longitudinal de référence de châssis (R2) du véhicule automobile (2) et un axe longitudinal de référence d'essieu (R1) du véhicule automobile (2), comportant:

> - une unité de mesure (6) comprenant au moins deux accéléromètres (A1, A2) liés au châssis du véhicule (2), les deux accéléromètres (A1, A2) étant configurés pour mesurer, respectivement, une accélération dite longitudinale et une accélération dite verticale du véhicule automobile (2), l'unité de mesure (6) étant configurée pour mesurer une pluralité d'ensembles de mesure successifs, chaque ensemble de mesure comprenant au moins une accélération longitudinale (Ax) mesurée et une accélération verticale (Az) mesurée ; et
> - une unité de calcul (7) configurée pour calculer l'assiette ($\alpha$) du véhicule automobile (2) à l'aide exclusivement des mesures réalisées par l'unité de mesure (6), ladite unité de calcul (7) considérant que l'accélération verticale (Az) et l'accélération longitudinale (Ax) sont liées entre elles par une fonction affine via un coefficient de proportionnalité a1 dépendant de l'assiette ($\alpha$) pour une pente de route (P) constante, ladite unité de calcul (7) comprenant :

• un premier élément (9) configuré pour mettre en oeuvre une régression linéaire, à l'aide d'une pluralité d'ensembles de mesure comprenant chacun au moins une accélération verticale Az et une accélération longitudinale Ax, afin de déterminer une pluralité de coefficients de proportionnalité a1 ; et
• un second élément (10) configuré pour déterminer ladite assiette ($\alpha$), à partir des coefficients de proportionnalité a1 déterminés par le premier élément (9) ;

le dispositif étant **caractérisé en ce que** :

l'unité de mesure (6) comporte, de plus, un troisième accéléromètre (A3) configuré pour mesurer une accélération latérale, qui est orthogonale auxdites accélérations verticale et longitudinale, l'accélération latérale mesurée par l'accéléromètre (A3) étant utilisée par l'unité de calcul (7) au moins pour éliminer des trajectoires non rectilignes dans des marges prédéterminées, ledit coefficient de proportionnalité *a*1 vérifiant la relation suivante :

$$a1 = a0 + Kzx$$

dans laquelle :

• *Kzx* est un paramètre interne du système ; et
• *a0 = -tgα, α* étant l'assiette et *tg* la tangente,

et l'étape de calcul comprenant une sous-étape auxiliaire consistant à calculer le paramètre interne du système *Kzx.*

7. Dispositif selon la revendication 6,
**caractérisé en ce qu'**il comporte de plus :

- une unité de calcul auxiliaire (13) configurée pour calculer une valeur de correction d'un angle d'éclairage d'un projecteur (3) du véhicule automobile (2), à l'aide de l'assiette ($\alpha$) du véhicule automobile (2) calculée par ladite unité de calcul (7) ; et
- une liaison de transmission (14) configurée pour transmettre cette valeur de correction à au moins un élément correcteur (15) apte à corriger l'angle d'éclairage du projecteur (3) du véhicule automobile (2).

8. Dispositif selon l'une des revendications 6 et 7,
**caractérisé en ce que** l'unité de mesure (6) comporte, de plus, au moins un gyromètre (G).

9. Système de correction d'un angle d'éclairage d'un projecteur de véhicule automobile,
**caractérisé en ce qu'**il comporte un dispositif (1) tel que celui spécifié sous l'une des revendications 6 à 8, et au moins un élément correcteur (15) apte à corriger l'angle d'éclairage du projecteur (3).

10. Projecteur pour véhicule automobile,
**caractérisé en ce qu'**il comporte au moins un système (20) de correction d'angle d'éclairage, tel que celui spécifié sous la revendication 9.

**Patentansprüche**

1. Verfahren zur autonomen Bestimmung mindestens eines Neigungswinkels eines Kraftfahrzeugs (2), wobei der Neigungswinkel ($\alpha$) den Winkel zwischen einer Fahrwerklängsbezugsachse (R2) des Kraftfahrzeugs (2) und einer Achsenlängsbezugsachse (R1) des Kraftfahrzeugs (2) darstellt, umfassend:

- einen Schritt der Messung, der mithilfe mindestens zweier Beschleunigungsmesser (A1, A2) durchgeführt wird, die mit dem Fahrwerk des Fahrzeugs (2) verbunden sind, wobei die zwei Beschleunigungsmesser (A1, A2) konfiguriert sind, um eine als längslaufend bezeichnete Beschleunigung bzw. eine als vertikal bezeichnete Beschleunigung des Kraftfahrzeugs (2) zu messen, wobei der Schritt der Messung darin besteht, eine Vielzahl von aufeinanderfolgenden Messmengen zu messen, wobei jede Messmenge mindestens eine gemessene längslaufende Beschleunigung und eine gemessene vertikale Beschleunigung umfasst; und
- einen Schritt der Berechnung, der für eine Berechnungseinheit (7) durchgeführt wird und darin besteht, den Neigungswinkel ($\alpha$) des Fahrzeugs (2) ausschließlich mithilfe der im Schritt der Messung vorgenommenen Messungen zu berechnen, wobei der Schritt der Berechnung davon ausgeht, dass die vertikale Beschleunigung (Az) und die längslaufende Beschleunigung (Ax) durch eine affine Funktion über einen Proportionalitätskoeffizienten a1, der vom Neigungswinkel ($\alpha$) für ein konstantes Straßengefälle (P) abhängt, untereinander verbunden sind, wobei der Schritt der Berechnung Folgendes umfasst:

- einen ersten Teilschritt, der darin besteht, eine lineare Regression mithilfe einer Vielzahl von Messmengen durchzuführen, die jeweils mindestens eine vertikale Beschleunigung (Az) und eine längslaufende Beschleunigung (Ax) umfassen, um einen Proportionalitätskoeffizienten a1 zu bestimmen, wobei der erste Teilschritt eine Vielzahl von Malen durchgeführt wird, um eine Vielzahl von Proportionalitätskoeffizienten a1 zu erhalten; und
- einen zweiten Teilschritt, der darin besteht, den Neigungswinkel ($\alpha$) ausgehend von den im ersten Teilschritt bestimmten Proportionalitätskoeffizienten a1 zu bestimmen;

wobei das Verfahren **dadurch gekennzeichnet ist, dass**:

der Schritt der Messung darin besteht, mithilfe eines dritten Beschleunigungsmessers (A3) ebenfalls eine seitliche Beschleunigung zu messen, die orthogonal zu der vertikalen und der längslaufenden Beschleunigung ist, wobei die im Schritt der Messung gemessene seitliche Beschleunigung im Schritt der Berechnung mindestens dazu verwendet wird, in vorgegebenen Spielräumen nicht geradlinige Fahrstrecken zu eliminieren,
wobei der Proportionalitätskoeffizient a1 die folgende Beziehung verifiziert:

$$a1 = a0 + Kzx$$

bei der:

- $Kzx$ ein innerer Parameter des Systems ist; und
- $a0 = -tg\,\alpha$, wobei $\alpha$ der Neigungswinkel ist und $tg$ die Tangente,

und der Schritt der Berechnung einen Hilfsteilschritt umfasst, der darin besteht, den inneren Parameter des Systems $Kzx$ zu berechnen.

2. Verfahren nach einem der vorstehenden Ansprüche, **dadurch gekennzeichnet, dass** der Neigungswinkel ($\alpha$) für ein stehendes Kraftfahrzeug (2) ausgehend von einer Abweichung eines Erhebungswinkels ($\theta$) des Kraftfahrzeugs (2) in Bezug auf die Horizontale (H) bestimmt wird, wobei der Erhebungswinkel ($\theta$) gleich der Summe aus dem Gefälle (P) der Straße (S) und dem Neigungswinkel ($\alpha$) des Kraftfahrzeugs (2) ist, wobei die Abweichung des Erhebungswinkels ($\theta$) ausschließlich ausgehend von der im Schritt der Messung gemessenen, einzigen längslaufenden Beschleunigung bestimmt wird.

3. Verfahren nach einem der vorstehenden Ansprüche, **dadurch gekennzeichnet, dass** der Schritt der Messung darin besteht, mithilfe mindestens eines Gyrometers (G) ebenfalls einen gyrometrischen Wert zu messen, wobei der im Schritt der Messung gemessene gyrometrische Wert im Schritt der Berechnung mindestens dazu verwendet wird, nicht geradlinige Fahrstrecken zu eliminieren.

4. Verfahren nach einem der vorstehenden Ansprüche, **dadurch gekennzeichnet, dass** der Schritt der Messung darin besteht, mithilfe mindestens eines Magnetometers (M) ebenfalls einen Magnetfeldwert zu messen.

5. Verfahren nach einem der vorstehenden Ansprüche, **dadurch gekennzeichnet, dass** es weiter Folgendes umfasst:

- einen Hilfsschritt der Berechnung, der darin besteht, mithilfe des im Schritt der Berechnung berechneten Neigungswinkels ($\alpha$) des Kraftfahrzeugs (2) einen Korrekturwert eines Beleuchtungswinkels eines Scheinwerfers (3) des Kraftfahrzeugs (2) zu berechnen; und
- einen Schritt der Übertragung, der darin besteht, diesen Korrekturwert an ein Korrekturelement (15) zu übertragen, das imstande ist, den Beleuchtungswinkel des Scheinwerfers (3) des Kraftfahrzeugs (2) zu korrigieren.

6. Vorrichtung zur autonomen Bestimmung mindestens eines Neigungswinkels eines Kraftfahrzeugs (2), wobei der Neigungswinkel ($\alpha$) den Winkel zwischen einer Fahrwerklängsbezugsachse (R2) des Kraftfahrzeugs (2) und einer Achsenlängsbezugsachse (R1) des Kraftfahrzeugs (2) darstellt, umfassend:

- eine Messeinheit (6), umfassend mindestens zwei Beschleunigungsmesser (A1, A2), die mit dem Fahrwerk des Fahrzeugs (2) verbunden sind, wobei die zwei Beschleunigungsmesser (A1, A2) konfiguriert sind, um eine als längslaufend bezeichnete Beschleunigung bzw. eine als vertikal bezeichnete Beschleunigung des Kraftfahrzeugs (2) zu messen, wobei die Messeinheit (6) konfiguriert ist, um eine Vielzahl von aufeinanderfolgenden Messmengen zu messen, wobei jede Messmenge mindestens eine gemessene längslaufende Beschleunigung (Ax) und eine gemessene vertikale Beschleunigung (Az) umfasst; und
- eine Berechnungseinheit (7), die konfiguriert ist, um den Neigungswinkel ($\alpha$) des Kraftfahrzeugs (2) ausschließlich mithilfe der von der Messeinheit (6) vorgenommenen Messungen zu berechnen, wobei die Berechnungseinheit (7) davon ausgeht, dass die vertikale Beschleunigung (Az) und die längslaufende Beschleunigung (Ax) durch eine affine Funktion über einen Proportionalitätskoeffizienten a1, der vom Nei-

gungswinkel ($\alpha$) für ein konstantes Straßengefälle (P) abhängt, untereinander verbunden sind, wobei die Berechnungeinheit (7) Folgendes umfasst:

- ein erstes Element (9), das konfiguriert ist, um eine lineare Regression mithilfe einer Vielzahl von Messmengen durchzuführen, die jeweils mindestens eine vertikale Beschleunigung Az und eine längslaufende Beschleunigung Ax umfassen, um eine Vielzahl von Proportionalitätskoeffizienten a1 zu bestimmen, und
- ein zweites Element (10), das konfiguriert ist, um den Neigungswinkel ($\alpha$) ausgehend von den vom ersten Element (9) bestimmten Proportionalitätskoeffizienten a1 zu bestimmen;

wobei die Vorrichtung **dadurch gekennzeichnet ist, dass**:

die Messeinheit (6) weiter einen dritten Beschleunigungsmesser (A3) umfasst, der konfiguriert ist, um eine seitliche Beschleunigung zu messen, die orthogonal zu der vertikalen und der längslaufenden Beschleunigung ist, wobei die von dem Beschleunigungsmesser (A3) gemessene seitliche Beschleunigung von der Berechnungseinheit (7) mindestens dazu verwendet wird, in vorgegebenen Spielräumen nicht geradlinige Fahrstrecken zu eliminieren, wobei der Proportionalitätskoeffizient $a1$ die folgende Beziehung verifiziert:

$$a1 = a0 + Kzx$$

bei der:

- $Kzx$ ein innerer Parameter des Systems ist; und
- $a0 = -tg\alpha$, wobei $\alpha$ der Neigungswinkel ist und $tg$ die Tangente,

und der Schritt der Berechnung einen Hilfsteilschritt umfasst, der darin besteht, den inneren Parameter des Systems $Kzx$ zu berechnen.

**7.** Vorrichtung nach Anspruch 6,
**dadurch gekennzeichnet, dass** sie weiter umfasst:

- einen Hilfsberechnungseinheit (13), die konfiguriert ist, um mithilfe des von der Berechnungseinheit (7) berechneten Neigungswinkels ($\alpha$) des Kraftfahrzeugs (2) einen Korrekturwert eines Beleuchtungswinkels eines Scheinwerfers (3) des Kraftfahrzeugs (2) zu berechnen; und

- eine Übertragungsverbindung, (14), die konfiguriert ist, um diesen Korrekturwert an mindestens ein Korrekturelement (15) zu übertragen, das imstande ist, den Beleuchtungswinkel des Scheinwerfers (3) des Kraftfahrzeugs (2) zu korrigieren.

**8.** Vorrichtung nach einem der Ansprüche 6 und 7, **dadurch gekennzeichnet, dass** die Messeinheit (6) weiter mindestens ein Gyrometer (G) umfasst.

**9.** System zur Korrektur eines Beleuchtungswinkels eines Kraftfahrzeugscheinwerfers,
**dadurch gekennzeichnet, dass** es eine wie die in einem der Ansprüche 6 bis 8 dargelegte Vorrichtung (1) und mindestens ein Korrekturelement (15), das imstande ist, den Beleuchtungswinkel des Scheinwerfers (3) zu korrigieren, umfasst.

**10.** Scheinwerfer für Kraftfahrzeug,
**dadurch gekennzeichnet, dass** er mindestens ein wie das in Anspruch 9 dargelegte System (20) zur Beleuchtungswinkelkorrektur umfasst.

**Claims**

**1.** A method for autonomously determining at least one trim of a motor vehicle (2), said trim ($\alpha$) illustrating the angle between a longitudinal frame reference axis (R2) of the motor vehicle (2) and a longitudinal axle reference axis (R1) of the motor vehicle (2), comprising:

- a measurement step implemented using at least two accelerometers (A1, A2) linked to the frame of the vehicle (2), the two accelerometers (A1, A2) being configured to measure, respectively, an acceleration referred to as longitudinal and an acceleration referred to as vertical of the motor vehicle (2), the measurement step consisting in measuring a plurality of successive measurement sets, each measurement set comprising at least one measured longitudinal acceleration and one measured vertical acceleration; and
- a calculation step implemented for a calculation unit (7) and consisting of calculating the trim ($\alpha$) of the vehicle (2) using exclusively the measurements made in the measurement step, said calculation step considering that the vertical acceleration (Az) and the longitudinal acceleration (Ax) are linked together by an affine function via a proportionality coefficient a1 depending on the trim ($\alpha$) for a constant road slope (P), said calculation step comprising:

• a first sub-step consisting of implementing a linear regression, using a plurality of measurement sets each comprising at least a vertical acceleration (Az) and a longitudinal acceleration (Ax), in order to determine a proportionality coefficient a1, said first sub-step being implemented a plurality of times to obtain a plurality of proportionality coefficients a1; and
• a second sub-step consisting of determining said trim (α), from the proportionality coefficients a1 determined in the first sub-step;

the method being **characterised in that**:

the measurement step consists of also measuring, using a third accelerometer (A3), a lateral acceleration which is orthogonal to said vertical and longitudinal accelerations, said lateral acceleration measured in the measurement step being used in the calculation step at least to eliminate non-rectilinear trajectories within predetermined margins,
said proportionality coefficient a1 satisfying the following relationship:

$$a1 = a0 + Kzx$$

wherein:

• *Kzx* is an internal parameter of the system; and
• *a0 = -tgα, α* being the trim and *tg* the tangent,

and the calculation step comprising an auxiliary sub-step consisting of calculating the internal parameter of the system *Kzx*.

2. The method according to any one of the preceding claims, **characterised in that**, for a motor vehicle (2) at a standstill, the trim (α) is determined from a variation in an angle of inclination (θ) of the motor vehicle (2) with respect to the horizontal (H), the angle of inclination (θ) being equal to the sum of the slope (P) of the road (S) and the trim (α) of the motor vehicle (2), said variation in the angle of inclination (θ) being determined exclusively from the longitudinal acceleration alone, measured in the measurement step.

3. The method according to any one of the preceding claims, **characterised in that** the measurement step also consists in measuring, using at least one gyrometer (G), a gyrometric value, said gyrometric value measured in the measurement step being used in the calculation step at least to eliminate non-rectilinear trajectories.

4. The method according to any one of the preceding claims,
**characterised in that** the measuring step also consists in measuring a magnetic field value using at least one magnetometer (M).

5. The method according to any one of the preceding claims, **characterised in that** it further comprises:

- an auxiliary calculation step consisting in calculating a correction value for a lighting angle of a headlamp (3) of the motor vehicle (2), using the trim (α) of the motor vehicle (2) calculated in said calculation step; and
- a transmission step consisting of transmitting this correction value to a correction element (15) capable of correcting the lighting angle of the headlight (3) of the motor vehicle (2).

6. A device for autonomously determining at least one trim of a motor vehicle (2), said trim (α) illustrating the angle between a longitudinal frame reference axis (R2) of the motor vehicle (2) and a longitudinal axle reference axis (R1) of the motor vehicle (2), comprising:

- a measurement unit (6) comprising at least two accelerometers (A1, A2) linked to the frame of the vehicle (2), the two accelerometers (A1, A2) being configured to measure, respectively, an acceleration referred to as longitudinal and an acceleration referred to as vertical of the motor vehicle (2), the measurement unit (6) being configured to measure a plurality of successive measurement sets, each measurement set comprising at least one measured longitudinal acceleration (Ax) and one measured vertical acceleration (Az); and
- a calculation unit (7) configured to calculate the trim (α) of the motor vehicle (2) using exclusively the measurements made by the measurement unit (6), said calculation unit (7) considering that the vertical acceleration (Az) and the longitudinal acceleration (Ax) are linked together by an affine function via a proportionality coefficient a1 depending on the trim (α) for a constant road slope (P), said calculation unit (7) comprising:

• a first element (9) configured to implement a linear regression, using a plurality of measurement sets each comprising at least one vertical acceleration Az and one longitudinal acceleration Ax, in order to determine a plurality of proportionality coefficients a1; and

• a second element (10) configured to determine said trim ($\alpha$) from the proportionality coefficients a1 determined by the first element (9);

the device being **characterised in that**:

the measuring unit (6) comprises, in addition, a third accelerometer (A3) configured to measure a lateral acceleration, which is orthogonal to said vertical and longitudinal accelerations, the lateral acceleration measured by the accelerometer (A3) being used by the calculation unit (7) at least to eliminate non-rectilinear trajectories within predetermined margins, said proportionality coefficient a1 satisfying the following relationship:

$$a1 = a0 + Kzx$$

in which:

• $Kzx$ is an internal parameter of the system; and
• $a0 = -tg\alpha$, $\alpha$ being the trim and $tg$ the tangent,

and the calculation step comprising an auxiliary sub-step of calculating the internal system parameter $Kzx$.

7. The device according to claim 6, **characterised in that** it further comprises:

- an auxiliary calculation unit (13) configured to calculate a correction value of a lighting angle of a headlamp (3) of the motor vehicle (2), using the trim ($\alpha$) of the motor vehicle (2) calculated by said calculation unit (7); and
- a transmission link (14) configured to transmit this correction value to at least one corrector element (15) capable of correcting the lighting angle of the headlight (3) of the motor vehicle (2).

8. The device according to one of claims 6 and 7, **characterised in that** the measuring unit (6) also comprises at least one gyrometer (G).

9. A system for correcting a lighting angle of a motor vehicle headlamp, **characterised in that** it comprises a device (1) such as that specified in one of the claims 6 to 8, and at least one corrector element (15) capable of correcting the lighting angle of the headlight (3).

10. A headlamp for a motor vehicle, **characterised in that** it comprises at least one system (20) for correcting the lighting angle, such as that specified in claim 9.

Fig. 1

Fig. 2

Fig. 3

Fig. 4

**EP 3 571 466 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2724889 A
- WO 2016042599 A
- FR 2915283
- EP 2952385 A